(19) Europäisches Patentamt
European Patent Office
Office européen des brevets

(11) **EP 4 648 131 A2**

(12) **EUROPEAN PATENT APPLICATION**

(43) Date of publication:
**12.11.2025 Bulletin 2025/46**

(21) Application number: **25187346.9**

(22) Date of filing: **03.07.2025**

(51) International Patent Classification (IPC):
$H01M\ 4/36^{(2006.01)}$       $H01M\ 4/38^{(2006.01)}$
$H01M\ 4/62^{(2006.01)}$       $H01M\ 4/134^{(2010.01)}$
$H01M\ 4/02^{(2006.01)}$

(52) Cooperative Patent Classification (CPC):
**H01M 4/362; H01M 4/386; H01M 4/625;**
C01B 32/00; H01M 4/134; H01M 2004/021;
Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.09.2024   CN 202411385249**

(71) Applicant: **BTR New Material Group Co., Ltd.
Shenzhen, Guangdong 518106 (CN)**

(72) Inventors:
• **HE, Peng**
  **Shenzhen, 518106 (CN)**
• **LIU, Zhangkun**
  **Shenzhen, 518106 (CN)**
• **XIAO, Chengmao**
  **Shenzhen, 518106 (CN)**
• **REN, Jianguo**
  **Shenzhen, 518106 (CN)**
• **HE, Xueqin**
  **Shenzhen, 518106 (CN)**

(74) Representative: **Studio Torta S.p.A.
Via Viotti, 9
10121 Torino (IT)**

(54) **MATRIX, ANODE MATERIAL, AND SECONDARY BATTERY**

(57)     A matrix, a anode material, and a secondary battery. The matrix has pores. The matrix includes a carbon material. An average value $D_0$ of particle sizes of the matrix is 5.5 $\mu$m to 9.5 $\mu$m, and a standard deviation $S_0$ of the particle sizes of the matrix is 0.08 to 0.35. The anode material includes the matrix and an active substance. The matrix has the pores, and at least partial active substance is disposed in the pores of the matrix. An average value $D_1$ of particle sizes of the anode material is 5.5 $\mu$m to 9.5 $\mu$m, and a standard deviation $S_1$ of the particle sizes of the anode material is 0.1 to 0.35. The secondary battery based on the matrix or the anode material has good charge-discharge efficiency, cycling stability, and dynamic performance.

Fig.1

EP 4 648 131 A2

## Description

### Technical Field

This disclosure relates to the field of electrochemical energy storage, and specifically, to a matrix, a anode material, and a secondary battery.

### Background

A anode material may include a matrix and an active substance deposited in pores of the matrix, such as a silicon material. However, the silicon material may be unevenly deposited on the porous matrix, leading to uneven stress distribution after active ions are embedded, increasing the expansion rate and the risk of cracking and pulverization during cycling of the anode material, and thus accelerating capacity degradation. Furthermore, when the above anode material is prepared into an electrode plate, particles of the anode material may have large gaps, thus reducing the energy density of the electrode plate; and these large aperture gaps also affect the contact and infiltration of electrolyte and the anode material, thus reducing the charge-discharge efficiency and dynamic performance of a battery.

### Summary

In view of this, the present disclosure provides a matrix, a anode material, and a secondary battery, so as to solve at least one of the above technical problems.

In order to implement the above objectives, in a first aspect, the present disclosure provides a matrix. The matrix has pores. The matrix includes a carbon material. An average value $D_0$ of particle sizes of the matrix is 5.5 $\mu$m to 9.5 $\mu$m, and a standard deviation $S_0$ of the particle sizes of the matrix is 0.08 to 0.35.

In a second aspect, the present disclosure provides a anode material. The anode material includes a matrix and active substances. The matrix has the pores, and at least partial active substance is disposed in the pores of the matrix. An average value $D_1$ of particle sizes of the anode material is 5.5 $\mu$m to 9.5 $\mu$m, and a standard deviation $S_1$ of the particle sizes of the anode material is 0.1 to 0.35.

In a third aspect, the present disclosure further provides a anode plate, including a anode current collector and a anode active material layer disposed on the anode current collector. The anode active material layer includes the above anode material.

In a fourth aspect, the present disclosure further provides a secondary battery, including the above anode plate.

In the present disclosure, by controlling the average value of the particle sizes and the standard deviation of the particle sizes of the matrix or the anode material to respectively meet a preset condition, the active substance can be deposited on the matrix more evenly, such that when the anode material is embedded with active ions during a charge-discharge cycle, the stress distribution of the anode material particles is more evenly, thereby reducing the expansion rate and the risk of cracking and pulverization during the cycling of the anode material, and facilitating the maintenance of a stable capacity and improvement of cycling performance. Furthermore, when the preset condition is met, the gaps between the anode material particles are reduced, such that the volume energy density of the anode plate prepared by the anode material is increased, and the distribution uniformity of a conductive agent and an electrolyte among the anode material is also improved, thereby improving the contact and infiltration of the electrolyte and the anode material, and facilitating the charge-discharge efficiency and dynamic performance of the obtained secondary battery.

### Brief Description of the Drawings

Fig. 1 is a schematic structural diagram of a secondary battery during charging according to an implementation of the present disclosure.

Fig. 2 is a schematic structural diagram of a secondary battery during discharging according to an implementation of the present disclosure.

Fig. 3 is a scanning electron microscope diagram of a anode material according to Embodiment 1 of the present disclosure.

Fig. 4 is a scanning electron microscope diagram of anode material particles according to Embodiment 1 of the present disclosure.

Fig. 5 is an energy-dispersive X-ray spectrum of carbon in anode material particles according to Embodiment 1 of the present disclosure.

Fig. 6 is an energy-dispersive X-ray spectrum of silicon in anode material particles according to Embodiment 1 of the present disclosure.

In the drawings:

| | |
|---|---|
| Electrode assembly | 100 |
| Cathode plate | 101 |
| Anode plate | 102 |
| Separation film | 103 |

## Detailed Description of the Embodiments

Embodiments of the present disclosure are described below in detail. The embodiments described below with reference to the drawings are exemplary and are merely used to explain the present disclosure, but should not be construed as a limitation on the present disclosure. It is to be noted that, unless otherwise defined, all technical and scientific terms as used herein have the same meanings as those commonly understood by those skilled in the technical field of the present disclosure. The implementations in the present disclosure and the features in the implementations may be combined with one another without conflict. Many specific details are set forth in the following description to facilitate a full understanding of the present disclosure, the described implementations are only part of the implementations of the present disclosure and not all of the implementations.

An implementation of the present disclosure provides a secondary battery, including a housing, an electrode assembly, and an electrolyte. The electrode assembly and an electrolyte solution are both located inside the housing.

The housing may be a packaging bag that is packaged by using a packaging film (e.g., aluminum plastic film), for example, a soft pack battery, which may, in some other embodiments, also be a steel shell battery, an aluminum shell battery, etc.

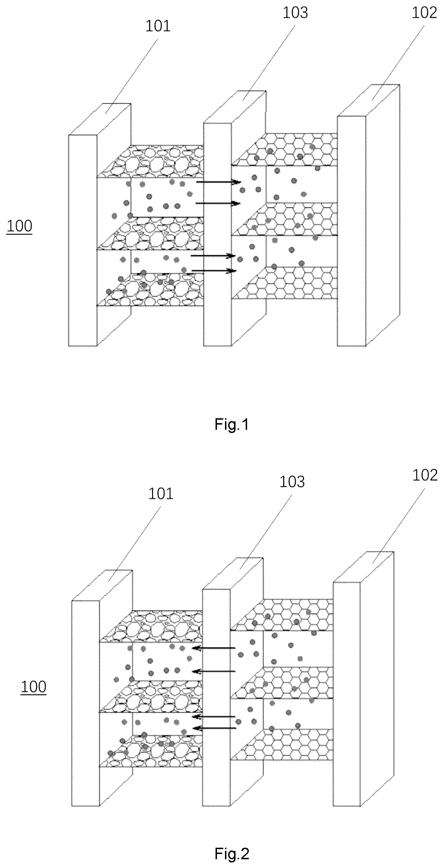

Referring to Fig. 1 and Fig. 2, the electrode assembly 100 includes a cathode plate 101, a anode plate 102, and a separation film 103. The separation film 103 is disposed between the cathode plate 101 and the anode plate 102. When the electrolyte (not shown in the figure) is provided, during charging, referring to Fig. 1, active ions (e.g., lithium ions) are de-embedded from lattices of a cathode material (e.g., lithiated intercalation compound) of the cathode plate 101, pass through the separation film 103 via the electrolyte, arrive at the anode plate 102, and are inserted into lattices of the anode material. During discharging, referring to Fig. 2, the active ions (e.g., lithium ions) are de-intercalated from the lattices of the anode material of the anode plate 102, pass through the separation film 103 via the electrolyte , arrive at the cathode plate 101 and are embedded into the lattices of the cathode material (e.g., lithiated intercalation compound). The generated electrons arrive at the cathode plate 101 via an external circuit from the anode plate 102. A reverse motion of the electrons forms a current, which may be used by an electrical appliance.

In some embodiments, the electrode assembly 100 may be of a laminated structure, which is formed by sequentially alternately stacking the cathode plate 101, the separation film 103, and the anode plate 102. In some other embodiments, the electrode assembly 100 may also be of a winding structure, which is formed by first sequentially stacking and then winding the cathode plate 101, the separation film 103, and the anode plate 102.

Cathode plate

The cathode plate 101 includes a cathode current collector and a cathode material active layer disposed on at least one surface of the cathode current collector. The cathode current collector may use aluminum foil, nickel foil, or the like, or may be a composite current collector disclosed in any related art, for example, but not limited to, a current collector that is formed by combining conductive foil and a polymer substrate. The cathode material active layer includes a cathode active material, and the cathode active material includes a compound (i.e., lithiated intercalation compound) in which the lithium ions may be reversibly embedded and de-embedded. In some embodiments, the cathode active material may include a lithium transition metal composite oxide. The lithium transition metal composite oxide contains lithium and at least one element selected from cobalt, manganese, and nickel. In some embodiments, the cathode active material may include, but is not limited to, at least one of lithium cobalt oxide ($LiCoO_2$), a lithium-nickel-manganese-cobalt ternary material (NCM), lithium manganate ($LiMn_2O_4$), lithium nickel manganese oxide ($LiNi_{0.5}Mn_{1.5}O_4$), or lithium iron phosphate ($LiFePO_4$).

The cathode material active layer further includes a binder, which is used to bond to cathode active material particles, such that a film layer is formed, and a bonding force between the cathode material active layer and the cathode current collector can also be improved. In some embodiments, the binder may include, but is not limited to, at least one of poly(vinyl alcohol), hydroxypropyl cellulose, diacetyl cellulose, polyvinyl chloride, carboxylated polyvinyl chloride, poly(vinyl fluoride), polymer containing ethylene oxide, polyvinylpyrrolidone, polyurethane, poly(tetrafluoroethylene), polyvinylidene fluoride, polyethylene, polypropylene, styrene butadiene rubber, acrylated (ester) styrene butadiene rubber, epoxy resin, or nylon.

The cathode material active layer may further include a conductive material. The conductive material includes, but is not limited to, a carbon-based material, a metal-based material, a conductive polymer, or any combination thereof. In some embodiments, the carbon-based material may include, but is not limited to, natural graphite, artificial graphite, carbon black, acetylene black, Ketjen black, carbon fiber, or any combination thereof. In some embodiments, the metal-based material may include, but is not limited to, a metal powder or a metal fiber, for example, copper, nickel, aluminum, or silver. In some embodiments, the conductive polymer may be a polyphenylene derivative.

Anode plate

The anode plate 102 includes a anode current collector and a anode material active layer disposed on at least one surface of the anode current collector. The anode current collector may use at least one of copper foil, nickel foil, stainless steel foil, titanium foil, or a carbon-based current collector, or may be a composite current collector disclosed in any related art, for example, but not limited to, a current collector that is formed by combining conductive foil and a polymer substrate.

The anode material active layer includes a anode material. The anode material includes the matrix and an active substance. The matrix has the pores, and at least partial active substance is disposed in the pores of the matrix. An average value $D_1$ of particle sizes of the anode material is 5.5 $\mu$m to 9.5 $\mu$m, and a standard deviation $S_1$ of the particle sizes of the anode material is 0.1 to 0.35. For example, the average value $D_1$ of the particle sizes of the anode material may be 5.5 $\mu$m, 6.0 $\mu$m, 6.5 $\mu$m, 7.0 $\mu$m, 7.5 $\mu$m, 8.0 $\mu$m, 8.5 $\mu$m, 9.0 $\mu$m, 9.5 $\mu$m, or any value within a range composed of any two of the above numerical values. The standard deviation $S_1$ of the particle sizes of the anode material may be 0.1, 0.15, 0.20, 0.25, 0.30, 0.35, or any value within a range composed of any two of the above numerical values.

In the present disclosure, when the average value $D_1$ of the particle sizes of the anode material of the anode plate 102 and the standard deviation $S_1$ of the particle sizes meet the above conditions, the active substance can be deposited on the matrix more evenly, such that when the anode material is embedded with active ions during a charge-discharge cycle, the stress distribution of the anode material particles is more evenly, thereby reducing the expansion rate and the risk of cracking and pulverization during the cycling of a battery prepared by the anode material, and facilitating the maintenance of a stable capacity of the battery prepared by the anode material and improvement of the cycling performance of the battery prepared by the anode material. Furthermore, when the foregoing conditions are met, the gaps between the anode material particles are reduced, such that the volume energy density of the anode plate 102 is increased, and the distribution uniformity of a conductive agent and an electrolyte among the anode material is also improved, thereby improving the contact and infiltration between the electrolyte and the anode material, and facilitating the charge-discharge efficiency and dynamic performance of the battery prepared by the anode material.

It is to be noted that, in an aspect, when the average value $D_1$ of the particle sizes of the anode material constituting the anode plate 102 is too small, for example, less than 5.5 $\mu$m, the particle size of the anode material particles is overall reflected to be relatively small, such formed anode material is accompanied by poor aperture gap uniformity and large specific surface area of the matrix in the anode material, leading to uneven deposition of the active substance on the matrix, and thus resulting in uneven expansion stress distribution and increased expansion rate of the anode material during the charge-discharge cycle; and the large specific surface area easily increases the contact between the active substance and the electrolyte, resulting in oxidization of the active substance (e.g., silicon material), thus leading to a reduction in the areal capacity density and Initial Coulombic Efficiency (ICE) of the anode material. When the average value $D_1$ of the particle sizes of the anode material constituting the anode plate 102 is too large, for example, greater than 9.5 $\mu$m, the particle size of the anode material particles is overall reflected to be relatively large, leading to the pore volume of the matrix in the anode material is relatively small; a space that may be used for adsorbing the active substance is relatively small, resulting in a reduction in the areal capacity density; and in this case, a large gap is easily formed between the anode materials, not facilitating the even distribution of the conductive agent and the electrolyte between the anode materials, and also resulting in uneven expansion stress, thereby further leading to an increase in the expansion rate and a reduction in the ICE. In another aspect, when the standard deviation $S_1$ of the particle sizes of the anode material constituting the anode plate 102 is too large, it indicates that a dispersion degree of particle size distribution of the anode material particles is too large, such that even though the average value of the particle sizes of the anode material meets the set condition, there is also a certain number of the anode material particles with too large or too small particle sizes inside. As described above, these anode material particles with too large or too small particle sizes all generate adverse effects.

Therefore, by controlling the average value $D_1$ of the particle sizes and the standard deviation $S_1$ of the particle sizes of the anode material constituting the anode plate 102 to meet the predetermined conditions, the anode material constituting the anode plate 102 overall has an appropriate particle size and the dispersion degree of particle size distribution is relatively low, such that the risk of a high expansion rate caused by uneven deposition or distribution of the active substance in the anode material can be reduced, and the risk of reduced charge-discharge efficiency due to uneven distribution of the conductive agent or the electrolyte between the anode materials can also be reduced. Therefore, the charge-discharge efficiency and dynamic performance of a secondary battery are improved.

In some embodiments, a relative standard deviation $S_1/D_1$ of the particle sizes of the anode material meets $0.010 \leq S_1/D_1 \leq 0.064$. For example, $S_1/D_1$ may be 0.010, 0.020, 0.025, 0.030, 0.035, 0.040, 0.045, 0.050, 0.055, 0.060, 0.064, or any value within a range composed of any two of the above numerical values. When the above condition is met, smaller gaps are formed between the anode materials, and the risk of forming larger gaps between the anode materials is reduced, thereby improving the even distribution of the electrolyte or the conductive agent between the matrices, and further promoting the even distribution of the expansion stress.

In some embodiments, based on the mass of the anode material, a mass proportion of oxygen in the anode material is 0.05% to 4.0%. For example, the mass proportion of the oxygen in the anode material may be 0.05%, 0.1%, 0.5%, 1%, 1.5%, 2%, 2.5%, 3%, 3.5%, 4%, or any value with in a range composed of any two of the above numerical values. The oxygen in the anode material includes oxygen of an oxygen-containing functional group on the matrix and oxygen formed after the active substance (e.g., silicon material) is oxidized. By controlling the mass proportion of the oxygen in the anode material within the above range, the oxidization of the active substance (e.g., silicon material) is reduced, thereby reducing the risk of decreasing the areal capacity density of the anode material.

In some embodiments, a specific surface area of the anode material is less than or equal to 10 $m^2/g$. For example, the specific surface area of the anode material may be 1 $m^2/g$, 2 $m^2/g$, 3 $m^2/g$, 4 $m^2/g$, 5 $m^2/g$, 6 $m^2/g$, 7 $m^2/g$, 8 $m^2/g$, 9 $m^2/g$, 10 $m^2/g$, or any value with in a range composed of any two of the above numerical values. By controlling the specific surface area of the anode material within the above range, formation of SEIs on a surface of the anode material may be reduced, thereby improving the ICE of a battery prepared by the anode material. When the specific surface area of the anode material is too large, the contact between the active substance in the anode material and the electrolyte is increased, more easily leading to the oxidation of the active substance, and thus reducing the areal capacity density of the anode material.

In some embodiments, a pore volume of the anode material is less than or equal to 0.15 $cm^3/g$. For example, the pore volume of the anode material may be 0.15 $cm^3/g$, 0.13 $cm^3/g$, 0.11 $cm^3/g$, 0.09 $cm^3/g$, 0.08 $cm^3/g$, 0.07 $cm^3/g$, 0.06 $cm^3/g$, 0.05 $cm^3/g$, or any value with in a range composed of any two of the above numerical values. The pore volume of the anode material being within the above range indicates that the active substance is well deposited in the pores of the matrix, such that the pore volume can further increase a areal capacity density of the anode material.

In some embodiments, a areal capacity density of the anode material is 4.55 $mAh/cm^2$ to 6.10 $mAh/cm^2$. For example, the areal capacity density of the anode material may be 4.55 $mAh/cm^2$, 4.60 $mAh/cm^2$, 4.65 $mAh/cm^2$, 4.70 $mAh/cm^2$, 4.80 $mAh/cm^2$, 5.10 $mAh/cm^2$, 5.50 $mAh/cm^2$, 5.90 $mAh/cm^2$, 6.10 $mAh/cm^2$, or any value with in a range composed of any two of the above numerical values.

In some embodiments, a powder conductivity of the anode material is 0.05 S/m to 5 S/m. For example, the powder conductivity of the anode material may be 0.05 S/m, 1 S/m, 1.5 S/m, 2 S/m, 2.5 S/m, 3S/m, 3.5 S/m, 4 S/m, 4.5 S/m, 5 S/m, or any value with in a range composed of any two of the above numerical values.

In some embodiments, an average pore diameter of the anode material is less than or equal to 10 nm. For example, the average pore diameter of the anode material may be 1 nm, 2 nm, 3 nm, 4 nm, 5 nm, 6 nm, 7 nm, 8 nm, 9 nm, 10 nm, or any value within a range composed of any two of the above numerical values.

In some embodiments, the anode material has a sphere-like structure, and a degree of sphericity of the anode material is 0.9 to 1.0. Compared to a anode material formed by an irregular polyhedral matrix, the anode material of the sphere-like structure has a relatively small specific surface area, facilitating the adjustment of the contact and infiltration between the anode material and the electrolyte or conductive agent. Furthermore, when the anode material has the sphere-like structure, smaller gaps are formed between the anode materials, thereby improving the even distribution of the electrolyte or the conductive agent between the anode materials, and further promoting the even distribution of the expansion stress.

In some embodiments, an average value $D_0$ of particle sizes of the matrix is 5.5 $\mu m$ to 9.5 $\mu m$, and a standard deviation $S_0$ of the particle sizes of the matrix is 0.08 to 0.35. For example, the average value $D_0$ of particle sizes of the matrix may be 5.5 $\mu m$, 6.0 $\mu m$, 6.5 $\mu m$, 7.0 $\mu m$, 7.5 $\mu m$, 8.0 $\mu m$, 8.5 $\mu m$, 9.0 $\mu m$, 9.5 $\mu m$, or any value within a range composed of any two of the above numerical values. The standard deviation $S_0$ of the particle sizes of the matrix may be 0.08, 0.1, 0.15, 0.20, 0.25, 0.30, 0.35, or any value within a range composed of any two of the above numerical values. The active substance is distributed in the pores of the matrix to form the anode material, such that it may be understood that, when the average value of particle sizes of the matrix is controlled within the above range, the anode material with average value of the particle sizes meeting the condition is formed. In some embodiments, a relative standard deviation $S_0/D_0$ of the particle sizes of the matrix is 0.008 to 0.064.

In some embodiments, the matrix has a sphere-like structure, and a degree of sphericity of the matrix is 0.9 to 1.0. Compared to the irregular polyhedral matrix, the matrix of the sphere-like structure has a relatively small specific surface area, facilitating the adjustment of the contact and infiltration between the anode material and the electrolyte or conductive agent. When the matrix has the sphere-like structure, smaller gaps are formed between the formed anode materials, thereby improving the even distribution of the electrolyte or the conductive agent between the anode materials, and further promoting the even distribution of the expansion stress.

In some embodiments, a total pore volume of the matrix is 0.5 $cm^3/g$ to 2.0 $cm^3/g$. For example, the total pore volume of the matrix may be 0.5 $cm^3/g$, 0.7 $cm^3/g$, 0.9 $cm^3/g$, 1.1 $cm^3/g$, 1.3 $cm^3/g$, 1.5 $cm^3/g$, 1.7 $cm^3/g$, 1.9 $cm^3/g$, 2.0 $cm^3/g$, or any value with in a range composed of any two of the above numerical values. Since the matrix has the pores, a certain total pore volume provides a sufficient deposition space. It is further found in the present disclosure that, when the total pore volume of the matrix is controlled within the above range, the deposition of the active substance is facilitated, thereby increasing the areal capacity density of the anode material based on such matrix.

In some embodiments, an average pore diameter of the matrix is 0.1 nm to 8 nm. For example, the average pore diameter of the matrix may be 0.1 nm, 0.5 nm, 1 nm, 2 nm, 3 nm, 5 nm, 6 nm, 7 nm, 8 nm, or any value within a range composed of any two of the above numerical values. Since there are micropores (pore diameter < 2 nm) generally in the matrix, when the average pore diameter of the matrix is relatively large, it means that there are more mesopores (pore diameter being 2-50 nm) or macropores (pore diameter > 50 nm), which may cause aperture gaps of the pores formed in the matrix to be poor in uniformity. The present disclosure finds that, when the aperture gap uniformity of the matrix is poor, it may be accompanied by the too small average value of the particle sizes of the matrix, and the deposition of the active substance in relatively more mesopores or macropores does not facilitate the even distribution of the active substance on the matrix, thus increasing the risk of uneven pulverization of the expansion stress of the matrix.

In some embodiments, the matrix includes a carbon material. In some embodiments, the carbon material includes one or more of artificial graphite, amorphous carbon, activated carbon, and mesocarbon microbeads.

In some embodiments, the matrix includes a non-carbon material. In some embodiments, the non-carbon material includes at least one of a metal oxide, a silicide, a silicate, a phosphate, a titanate, or an aluminoborate. The metal oxide includes one or more of aluminum oxide, zirconium oxide, germanium dioxide, and manganese dioxide. The silicide includes one or more of silicon carbide and silicon nitride. The silicate includes one or more of cordierite, mullite, and zeolite. The phosphate includes one or more of aluminum phosphate, magnesium phosphate, calcium phosphate, titanium phosphate, chromic phosphate, cobalt phosphate, nickel phosphate, germanium phosphate, zirconium phosphate, niobium phosphate, molybdenum phosphate, tantalum phosphate, tungsten phosphate, and lanthanum phosphate. The titanate includes one or more of calcium titanate, iron titanate, lithium titanate, and barium titanate.

In some embodiments, the active substance includes one or more of Si, Li, Na, K, Sn, Ge, Fe, Mg, Ti, Zn, Al, P, and Cu.

In some embodiments, the matrix is a carbon matrix. The active substance is a silicon material. The silicon material includes one or more of amorphous silicon, crystalline silicon, silicon oxide, silicon alloy, and a compound of the crystalline silicon and the amorphous silicon.

In some embodiments, based on the mass of the anode material, a mass proportion of carbon in the anode material is 30% to 70%. For example, the mass proportion of the carbon in the anode material may be 30%, 35%, 40%, 45%, 50%, 55%, 60%, 65%, 70%, or any value with in a range composed of any two of the above numerical values. The mass proportion of the carbon in the anode material is within the above range, sufficient conductive performance is provided for the anode material. In some embodiments, based on the mass of the anode material, a mass proportion of silicon in the anode material is 30% to 80%. For example, the mass proportion of the silicon in the anode material may be 30%, 35%, 40%, 45%, 50%, 55%, 60%, 65%, 70%, 75%, 80%, or any value with in a range composed of any two of the above numerical values. The mass proportion of the silicon in the anode material is within the above range, the areal capacity density of the anode material is increased, thereby improving the ICE.

The anode material active layer further includes a binder, which is used to bond to anode active substance particles, such that a film layer is formed, and a bonding force between the anode material active layer and the anode current collector can also be improved. In some embodiments, the binder may include, but is not limited to, poly(vinyl alcohol), hydroxypropyl cellulose, diacetyl cellulose, polyvinyl chloride, carboxylated polyvinyl chloride, poly(vinyl fluoride), polymers containing ethylene oxide groups, polyvinylpyrrolidone, polyurethane, poly(tetrafluoroethylene), polyvinylidene fluoride, polyethylene, polypropylene, styrene butadiene rubber, acrylated styrene rubber(A-SBR Rubber), epoxy resin, nylon, or the like.

The anode material active layer may further include a conductive material. The conductive material includes, but is not limited to, a carbon-based material, a metal-based material, a conductive polymer, or any combination thereof. In some embodiments, the carbon-based material may include, but is not limited to, natural graphite, artificial graphite, carbon black, acetylene black, Ketjenblack, carbon fiber, or any combination thereof. In some embodiments, the metal-based material may include, but is not limited to, a metal powder or a metal fiber, for example, copper, nickel, aluminum, or silver. In some embodiments, the conductive polymer may be a polyphenylene derivative.

Separation film

The separation film 103 includes a film layer having a porous structure, and a material thereof includes, but is not limited to, at least one of polyethylene, polypropylene, polyvinylidene fluoride, polyethylene terephthalate, polyimide, or aramid. For example, the separation film may be a polypropylene porous film, a polyethylene porous film, polypropylene non-woven fabric, polyethylene non-woven fabric, a polypropylene-polyethylene-polypropylene porous composite film, or the like.

Electrolyte

An electrolyte has the effect of conducting ions between a cathode plate and a anode plate. A state of the electrolyte may be one or more of a gel state, a solid state, and a liquid state. In some embodiments, the electrolyte uses an electrolyte solution. The electrolyte solution plays a role in conducting active ions between the cathode plate and the anode plate. In some embodiments, the electrolyte solution includes a lithium salt and an organic solvent. The lithium salt may be selected from, but is not limited to, one or more of lithium hexafluorophosphate ($LiPF_6$), lithium tetrafluoroborate ($LiBF_4$), lithium hexafluoroarsenate ($LiAsF_6$), lithium perchlorate ($LiClO_4$), lithium tetraphenylborate ($LiB(C_6H_5)_4$), lithium methanesulfonate ($LiCH_3SO_3$), lithium Bis(fluorosulfonyl)imide (LiFSI), lithium bis(trifluoromethanesulphonyl)imide (LiTFSI), lithium trifluoromethanesulfonate ($LiCF_3SO_3$), lithium bis(trifluoromethanesulphonyl)imide ($LiN(SO_2CF_3)_2$, tri(trifluoro-methanesulfonyl)methyl lithium ($LiC(SO_2CF_3)_3$), lithium bis(oxalate)borate (LiBOB), and lithium difluorophosphate ($LiPO_2F_2$). For example, the lithium salt selects the $LiPF_6$, because it may provide high ionic conductivity and improve a cycle characteristic. The organic solvent may be a carbonate compound, a carboxylate compound, an ether compound, a nitrile compound, other organic solvents, or a combination thereof. An example of the carbonate compound includes, but is not limited to, Diethyl Carbonate (DEC), Dimethyl Carbonate (DMC), Dipropyl Carbonate (DPC), Methyl Propyl Carbonate (MPC), Ethyl Propyl Carbonate (EPC), Ethyl Methyl Carbonate (MEC), Ethylene Carbonate (EC), Propylene Carbonate (PC), Butyl Carbonate (BC), Vinyl Ethylene Carbonate (VEC), Fluoroethylene Carbonate (FEC), carbonate-1,2-difluoroethylene ester, carbonate-1,1-difluoroethylene ester, carbonate-1,1,2-trifluoroethylene ester, carbonate-1,1,2,2-tetrafluoroethylene ester, carbonate-1-fluoro-2-methyl ethylene ester, carbonate-1-fluoro-1-methyl ethylene ester, carbonate-1,2-difluoro-1-methyl ethylene ester, carbonate-1,1,2-trifluoro-2-methyl ethylene ester, trifluoromethyl ethyl carbonate, or a combination thereof.

Another implementation of the present disclosure further provides a method for preparing a anode material. The preparation method includes the following steps.

First step: a carbon source solution is provided, a mass concentration of a carbon source is 2% to 5%, the carbon source solution is sprayed into a curing solution through electrostatic spraying, so as to obtain a mixed solution, a voltage of electrostatic spraying is 1 V to 30 V, the flow of electrostatic spraying is 0.5 mL/h to 5 mL/h, and the mixed solution is filtered to obtain a carbon precursor.

In the present disclosure, by using a carbon matrix as an example, at the stage of obtaining the carbon precursor, by controlling the concentration of the carbon source, the spray voltage and spray flow within the particular ranges, a particle size of the carbon precursor sprayed can be controlled so as to form more sphere-like carbon precursor particles, subsequent activation, and adsorption and densification of the active substance are affected, and the carbon matrix or the sphere-like anode material further adsorbed the active substance with the average value D of the particle sizes and the standard deviation S of the particle sizes meet the ranges is obtained, thereby preparing the anode material with excellent surface density, expansion rate, and ICE.

Specifically, in an aspect, when the concentration of the carbon source is too low, during the removing of a solvent by spray particles, solvent volatilization easily causes the particle size of the prepared carbon precursor to reduce, and at the same time, the volatilization of a larger amount of solvent tends to cause the carbon precursor to recess, which results in the deterioration of the particle size uniformity, the larger standard deviation of the particle size, and the larger relative standard deviation of the particle size. When the concentration of the carbon source is too high, the concentration of the carbon source in the particles sprayed through electrostatic spraying is too high, easily leading to the relatively large particle size of the sprayed particles. In an aspect, when the voltage of electrostatic spraying is too low, a discharge frequency and intensity are relatively low, causing the number of sphere-like carbon precursors sprayed to be reduced, and causing the particle size to be relatively large. When the voltage of electrostatic spraying is too high, the discharge frequency and intensity are relatively high, the number of the sphere-like carbon precursors sprayed can be increased, but the particle size is relatively small and poor in uniformity, the standard deviation of the particle size is relatively large, and the relative standard deviation of the particle size is also large. In still another aspect, when the spray flow is too low, sprayed sphere-like precursors are less, the particle size is relatively small and poor in uniformity, the standard deviation of the particle size is relatively large, and the relative standard deviation of the particle size is also large. When the spray flow is too high, although the number of the sprayed sphere-like precursors can be increased, a relatively large particle size of the particles sprayed is easily caused.

In some embodiments, the carbon source in the carbon source solution includes one or more of chitosan, resin, starch, and asphalt.

In some embodiments, the solvent in the carbon source solution includes one or more of water, ethanol, ethyl acetate, petroleum ether, tetrahydrofuran, acetone, dimethylformamide, and dichloromethane.

In some embodiments, the curing solution includes one or more of concentrated sulfuric acid, aldehyde, alcohol, amine, and calcium salt solutions.

Second step: the carbon precursor is carbonized and activated to obtain a porous carbon matrix.

The effect of carbonization includes maintaining the shape and structure stability of the carbon precursor, so as to reduce disintegration of the carbon precursor during activation, and the effect of activation includes etching the carbonized structure to generate aperture gaps, so as to obtain the carbon matrix having pores, thereby improving the adsorption capacity of the carbon matrix to nanosilicon.

In some embodiments, carbonization is performed in an inert gas atmosphere, a carbonization temperature is 500 °C to 900 °C, and a carbonization time is 1 h to 6 h. For example, the carbonization temperature may be 500 °C, 550 °C, 600 °C, 650 °C, 700 °C, 750 °C, 800 °C, 850 °C, 900 °C, or any value within a range composed of any two of the above numerical values. The carbonization time may be 1 h, 2 h, 3 h, 4 h, 5 h, 6 h, or any value within a range composed of any two of the above numerical values.

In some embodiments, activation is performed in water vapor with the flow of 1 L/min to 15 L/min, an activation temperature is 700 °C to 900 °C, and an activation time is 5 h to 24 h. For example, the flow of vapor may be 1 L/min, 3 L/min, 5 L/min, 7 L/min, 9 L/min, 11 L/min, 13 L/min, 15 L/min, or any value within a range composed of any two of the above numerical values. The activation time may be 5 h, 8 h, 12 h, 15 h, 18 h, 21 h, 24 h, or any value within a range composed of any two of the above numerical values.

Third step: airflow containing the nanosilicon is provided, and the airflow is adsorbed by using the porous carbon matrix, so as to obtain a complex precursor.

In some embodiments, providing the nanosilicon airflow includes cracking a silane gas in the inert gas atmosphere at 400 °C to 800 °C. For example, a temperature for silane gas cracking may be 400 °C, 450 °C, 500 °C, 550 °C, 600 °C, 650 °C, 700 °C, 750 °C, 800 °C, or any value within a range composed of any two of the above numerical values.

In some embodiments, an adsorption temperature is 400 °C to 800 °C, and an adsorption time is 1 h to 12 h. For example, the adsorption temperature may be 400 °C, 450 °C, 500 °C, 550 °C, 600 °C, 650 °C, 700 °C, 750 °C, 800 °C, or any value within a range composed of any two of the above numerical values. The adsorption time may be 1 h, 2 h, 4 h, 6 h, 8 h, 10 h, 12 h, or any value within a range composed of any two of the above numerical values.

Fourth step: a densification treatment is performed on the complex precursor, so as to obtain a anode material.

The effect of densification includes re-arranging carbon atoms on a surface of the complex precursor at a high temperature, so as to fill vacant aperture gaps, facilitating to reduce a specific surface area of the complex precursor, thereby obtaining the anode material.

In some embodiments, the densification treatment includes placing a composite material in the inert gas atmosphere for treatment for 2 h to 6 h at 500 °C to 950 °C. For example, a temperature for the densification treatment may be 500 °C, 550 °C, 600 °C, 650 °C, 700 °C, 750 °C, 800 °C, 850 °C, 900 °C, 950 °C, or any value within a range composed of any two of the above numerical values. A time for the densification treatment may be 2 h, 3 h, 4 h, 5 h, 6 h, or any value within a range composed of any two of the above numerical values.

The solutions of the present disclosure are described below with reference to embodiments. It will be understood by those skilled in the art that the following examples are intended only to explain the present disclosure and are not to be construed as a limitation of the present disclosure. Unless otherwise disclosed, the reagents, software, and instruments involved in the following embodiments that are not specifically disclosed are either conventional commercially available products or open sources.

Embodiment 1:

A anode material. A preparation method included the following steps.

At S1, chitosan was dissolved and dispersed in pure water to form a chitosan solution with a mass concentration of 2%, then the chitosan solution was sprayed to a 1wt% glutaraldehyde curing solution through an electrostatic spraying method, a voltage of electrostatic spraying was 10 kV, the flow of electrostatic spraying was 1 mL/h, and the curing solution was filtered to obtain a carbon precursor.

At S2, high-temperature carbonization was performed on the carbon precursor at 800 °C in 300L/h nitrogen, and then activation was performed for 10 h at 800 °C under a vapor flow of 10 L/min, so as to obtain a porous carbon material.

At S3, high-temperature cracking was performed on a 100 sccm silane gas at 700 °C in a 200sccm argon atmosphere to generate airflow containing nanosilicon, and then the airflow was adsorbed for 6 h at 650 °C by using the sphere-like porous carbon material, so as to obtain a complex precursor.

At S4, high-temperature densification was performed on the complex precursor at 900 °C in 500 sccm argon, so as to obtain a anode material.

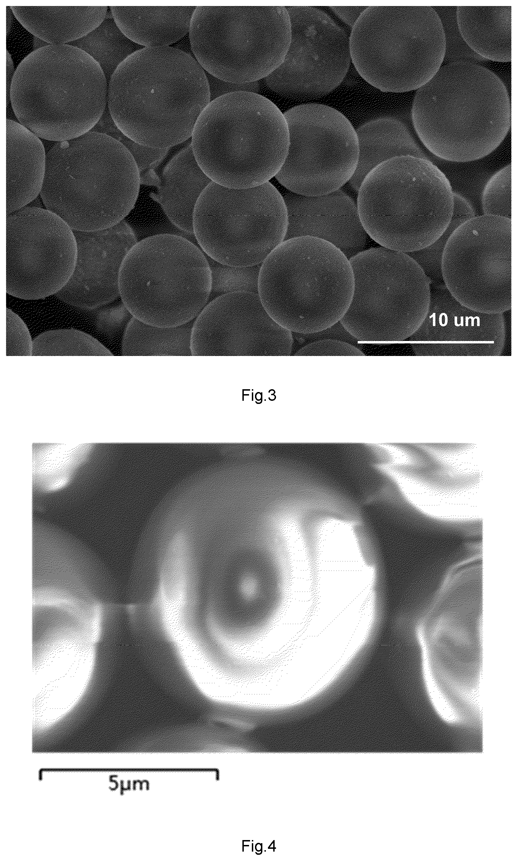

Fig. 3 was a scanning electron microscope diagram of the anode material obtained in Embodiment 1. From Fig. 3, it might be learned that, the anode material had an appropriate particle size, and a dispersion degree of particle size distribution was relatively low. The anode material had a sphere-like structure, and gaps formed between anode material particles are relatively small.

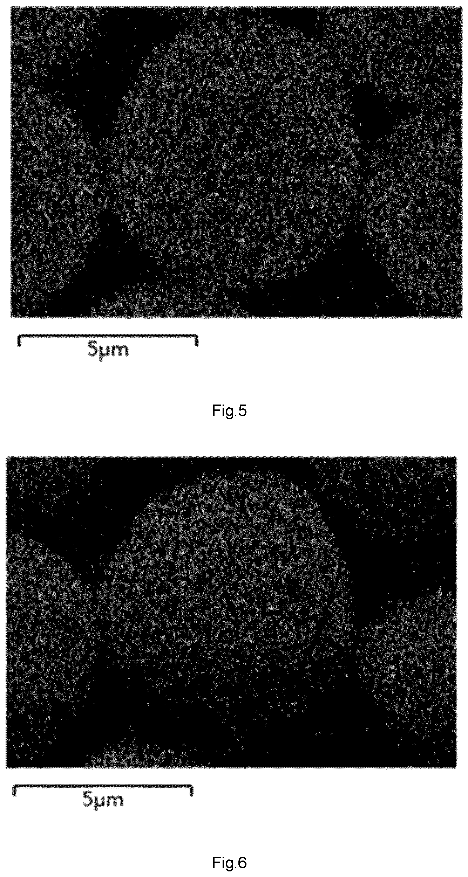

Referring to Fig. 4, Fig. 5, and Fig. 6, energy-dispersive X-ray spectrum analysis was performed on the anode material particles captured in Fig. 4, and a distribution having carbon (Fig. 5) and silicon (Fig. 6) on the anode material particles might be clearly obtained, indicating that the preparation method of Embodiment 1 successfully prepared the anode material using the carbon material as a porous matrix and attached with the silicon material.

Embodiment 2:

A difference between this embodiment and Embodiment 1 lied in that, in S1, the chitosan was dissolved and dispersed in the pure water to form a 3wt% chitosan solution.

Embodiment 3:

A difference between this embodiment and Embodiment 1 lied in that, in S1, the chitosan was dissolved and dispersed in the pure water to form a 5wt% chitosan solution.

Embodiment 4:

A difference between this embodiment and Embodiment 1 lied in that, in S1, the voltage of electrostatic spraying was set to 30 kV.

Embodiment 5:

A difference between this embodiment and Embodiment 1 lied in that, in S1, the voltage of electrostatic spraying was set to 30 kV, and the flow of electrostatic spraying was set to 0.5 mL/h.

Embodiment 6:

A difference between this embodiment and Embodiment 1 lied in that, in S1, the chitosan was dissolved and dispersed in the pure water to form a 5wt% chitosan solution, and the voltage of electrostatic spraying was set to 1 kV.

Embodiment 7:

A difference between this embodiment and Embodiment 1 lied in that, in S1, the chitosan was dissolved and dispersed in the pure water to form a 5wt% chitosan solution, the voltage of electrostatic spraying was 1 kV, and the flow of electrostatic spraying was set to 5 mL/h.

Comparative example 1:

A difference between this comparative example and Embodiment 5 lied in that, in S1, the chitosan was dissolved and dispersed in the pure water to form a 1wt% chitosan solution.

Comparative example 2:

A difference between this comparative example and Embodiment 7 lied in that, in S1, the chitosan was dissolved and dispersed in the pure water to form a 6wt% chitosan solution.

Comparative example 3:

A difference between this comparative example and Embodiment 5 lied in that, in S1, the voltage of electrostatic spraying was set to 32 kV.

Comparative example 4:

A difference between this comparative example and Embodiment 7 lied in that, in S1, the voltage of electrostatic spraying was set to 0.8 kV.

Comparative example 5:

A difference between this comparative example and Embodiment 5 lied in that, in S1, the flow of electrostatic spraying was set to 0.4 mL/h.

Comparative example 6:

A difference between this comparative example and Embodiment 7 lied in that, in S1, the flow of electrostatic spraying was set to 6 mL/h.

Some of the preparation parameters in Embodiments 1-7 and Comparative examples 1-6 of the present disclosure were referred to Table 1.

Table 1. Some of preparation parameters in Embodiments 1-7 and Comparative examples 1-6 of the present disclosure

| | Electrostatic spraying raw material mass concentration | Electrostatic spraying voltage (kV) | Electrostatic spraying flow (mL/h) | Vapor flow (L/min) | Activation temperature (°C) | Activation time (h) |
|---|---|---|---|---|---|---|
| Embodiment 1 | 2% | 10 | 1 | 10 | 800 | 10 |
| Embodiment 2 | 3% | 10 | 1 | 10 | 800 | 10 |
| Embodiment 3 | 5% | 10 | 1 | 10 | 800 | 10 |
| Embodiment 4 | 2% | 30 | 1 | 10 | 800 | 10 |
| Embodiment 5 | 2% | 30 | 0.5 | 10 | 800 | 10 |
| Embodiment 6 | 5% | 1 | 1 | 10 | 800 | 10 |
| Embodiment 7 | 5% | 1 | 5 | 10 | 800 | 10 |
| Comparative example 1 | 1% | 30 | 0.5 | 10 | 800 | 10 |
| Comparative example 2 | 6% | 1 | 5 | 10 | 800 | 10 |
| Comparative example 3 | 2% | 32 | 0.5 | 10 | 800 | 10 |
| Comparative example 4 | 5% | 0.8 | 5 | 10 | 800 | 10 |
| Comparative example 5 | 2% | 30 | 0.4 | 10 | 800 | 10 |
| Comparative example 6 | 5% | 1 | 6 | 10 | 800 | 10 |

Performance test

(1) Etching treatment:
The active substance was used as a silicon material for an example. While stirring, 150 mL of an HF acid solution with a mass fraction of 20% was dropwise added to 10 g of the anode material to generate $SiF_4$ and a $H_2$ gas and release heat, until there was no gas generated, the supernatant acid solution is removed through centrifugation, then 150 mL of the HF acid solution with the mass fraction of 20% was added to the anode material again, stirring was performed for 12 h, then the supernatant acid solution was removed again through centrifugation, and then the anode material was washed with pure water to neutral and dried, so as to obtain the anode material with the silicon material removed, that is, the matrix.

(2) Method for testing specific surface area of anode material or matrix:
A specific surface area was measured by using a TriStar 3000 surface area and pore diameter analyzer from Micromeritics, USA.

(3) Method for testing pore volume and pore diameter of anode material or matrix:

A test was performed by using an ASAP 2460 device from Micromeritics, USA, and a pore volume V was calculated within a pore diameter range of 17 Å-3000 Å by using a BJH Desorption cumulative volume of pores model.

Micropore and mesoporous analysis was performed by using Micromeretics ASAP 2460. At a liquid nitrogen temperature, an equilibrium amount of nitrogen adsorbed on a surface of an object was related to characteristics such as a pore diameter, and in combination with the rule of change of an adsorption amount with relative pressure in an adsorption process, various models might be fit to calculate the pore diameter. A report generated by software used a Density Functional Theory (DFT) method to calculate pore diameter distribution, an average pore diameter, a total pore volume, and a pore volume within a certain range.

(4) Method for testing mass content of carbon in anode material:
A G4 ICARUS HF infrared carbon sulfur analyzer from Bruker was used; a sample was burned at a high temperature in an oxygen-enriched state, and carbon and sulfur contained in the sample were respectively oxidized into carbon dioxide and sulfur dioxide; the generated gases entered an infrared detector with a carrier gas; and quantitative statistics was performed on changes in a carbon dioxide signal and sulfur dioxide signal, and contents of the carbon and sulfur might be calculated, respectively.

(5) Method for testing mass content of silicon in anode material:
An SA2-9-17TP box atmosphere furnace from Nanyang Xinyu was used; burning was performed under an oxygen atmosphere; silicon in the sample reacted with silicon monoxide to become silicon dioxide; and carbon was burned and discharged as carbon dioxide, and the silicon content was calculated through weighing.

(6) Method for testing mass content of oxygen in anode material:
An ONH 2000 oxygen nitrogen hydrogen element analyzer from VERDER was used, the sample was coated by a fluxing agent and molten in an inert atmosphere, the oxygen contained in the sample was reduced into carbon dioxide by carbon in a graphite crucible, the generated carbon dioxide entered the infrared detector with the carrier gas, and the content of oxygen might be calculated by performing quantitative statistics on changes in the carbon dioxide signal.

(7) Test for powder conductivity of anode material:
An MCP-PD51 powder conductivity meter of Mitsubishi Chemical was used, and a system used a four-probe method to determine a method for sample volume resistivity. The resistance of a powder might be determined by using an instrument, and then the conductivity and resistivity of the powder were automatically calculated by a computer. The conductivity at five pressure points of 4, 8, 12, 16, 20 kN was tested respectively.

(8) Electrochemical performance test:

1) A method for testing first discharging specific capacity and ICE included: anode slurry was prepared according to a mass ratio of a anode material, conductive carbon black, and polyacrylic acid (PPA) being 75:15:10, coated on copper foil, and dried and prepared into a anode plate. A metallic lithium sheet was used as a counter electrode, and a button battery was assembled in a glove box filled with argon. At a current density of 0.1 C, a charge-discharge test was performed on the button battery in a charge-discharge interval of 0.01 V-5 V, so as to obtain the first discharge specific capacity and ICE of the button battery.

2) A method for testing a capacity retention rate and an electrode plate thickness expansion rate after 50 cycles included: anode slurry was prepared according to a mass ratio of a anode active substance, conductive carbon black (Super-P), conductive graphite (KS-6), CMC, and Styrene Butadiene Rubber (SBR) being 92:2:2:2:2, coated on copper foil, and dried and prepared into a anode plate. The anode active substance was a mixture of the anode material of the present disclosure and the graphite. The proportions of the anode material and the graphite were determined by first reversible specific capacities of both and the capacities of the two to be prepared. A metallic lithium sheet was used as a counter electrode, and a button battery was assembled in a glove box filled with argon. At the current density of 1 C, the charge-discharge test was performed repeatedly for 50 times on the button battery in the charge-discharge interval of 0.01 V-5 V, so as to obtain the capacity retention rate and electrode plate thickness expansion rate of the battery after 50 cycles.

In the present disclosure, the average values of the particle sizes of the anode materials of Embodiments 1-7 and Comparative examples 1-6 were tested and counted. Test methods and counting methods included: sample photographing was performed under a condition of 3.0 kV 8.2 mm×1.0 K by using a Japan HITACHI S-4800 scanning electron microscope, and measurement statistics was performed on a particle size in a sample picture on nano measure; a certain square region was randomly selected; the region was divided into a nine-square grid; 200 particles in the four corners and in the center square were totally selected for particle size measurement; and statistical analysis was performed on a particle size measurement result by software Image J, so as to obtain an average value $D_0$ of the particle sizes and a standard deviation $S_0$ of the particle sizes of the carbon matrix. An average value $D_1$ of the particle sizes, a standard deviation $S_1$ of the particle sizes, and a relative standard deviation $S_1/D_1$ of the particle sizes of the anode material were obtained.

In the present disclosure, the anode materials of Embodiments 1-7 and Comparative examples 1-6 were respectively mixed with conductive carbon black (Super-P) and an acrylonitrile polycopolymer water-based adhesive (LA133) according to a ratio of 70:15:15, so as to obtain a slurry, and the slurry was uniformly coated on copper foil; the copper foil was dried and then prepared into an electrode plate, a thickness of the copper foil was measured as d0 by using a caliper, and a thickness of the electrode plate was measured as d1; a button battery was assembled, and the areal capacity density and ICE of the button battery were tested on a blue lightning battery testing cabinet M340A; the electrode plate was dismounted after 50 cycles; the electrode plate was cleaned and dried, and the thickness of the electrode plate was measured as d2 by using the caliper; and a calculation formula of an expansion rate for 50 cycles was as follows.

$$\text{Expansion rate} = \frac{(d2 - d1)}{(d1 - d0)} \times 100\%.$$

The above test or statistical results were shown in Table 2.

Table 2. Performance parameter in Embodiments 1-7 and Comparative examples 1-6 of the present disclosure

| | Average value of particle sizes of carbon matrix | Standard deviation of particle sizes of carbon matrix | Average value $D_1$ (μm) of particle sizes of anode material | Standard deviation $S_1$ of particle sizes of anode material | Relative standard deviation $S_1/D_1$ of particle sizes of anode material | Areal capacity density (mAh/cm$^2$) of anode material | 50-Cycle expansion rate (%) of anode plate | ICE (%) |
|---|---|---|---|---|---|---|---|---|
| Embodiment 1 | 7.4 | 0.21 | 7.5 | 0.25 | 0.033 | 6.07 | 15.1 | 95.2 |
| Embodiment 2 | 8.2 | 0.16 | 8.3 | 0.18 | 0.021 | 5.88 | 18.5 | 94.9 |
| Embodiment 3 | 8.8 | 0.11 | 8.8 | 0.12 | 0.013 | 5.68 | 19.4 | 94.7 |
| Embodiment 4 | 6.7 | 0.25 | 6.8 | 0.27 | 0.040 | 5.13 | 22.5 | 94.4 |
| Embodiment 5 | 5.5 | 0.33 | 5.6 | 0.34 | 0.061 | 4.55 | 24.8 | 93.3 |
| Embodiment 6 | 8.7 | 0.14 | 8.7 | 0.14 | 0.016 | 5.72 | 19.3 | 94.8 |
| Embodiment 7 | 9.3 | 0.08 | 9.4 | 0.10 | 0.010 | 5.54 | 20.1 | 94.5 |
| Comparative example 1 | 3.2 | 0.55 | 3.2 | 0.56 | 0.175 | 2.42 | 32.1 | 89.3 |

(continued)

| | Average value of particle sizes of carbon matrix | Standard deviation of particle sizes of carbon matrix | Average value $D_1$ ($\mu$m) of particle sizes of anode material | Standard deviation $S_1$ of particle sizes of anode material | Relative standard deviation $S_1/D_1$ of particle sizes of anode material | Areal capacity density (mAh/cm$^2$) of anode material | 50-Cycle expansion rate (%) of anode plate | ICE (%) |
|---|---|---|---|---|---|---|---|---|
| Comparative example 2 | 11.9 | 0.07 | 12.0 | 0.07 | 0.006 | 3.22 | 26.3 | 94.2 |
| Comparative example 3 | 4.6 | 0.52 | 4.7 | 0.51 | 0.108 | 3.02 | 29.9 | 90.2 |
| Comparative example 4 | 10.8 | 0.08 | 10.9 | 0.07 | 0.006 | 3.11 | 25.8 | 93.8 |
| Comparative example 5 | 4.7 | 0.49 | 4.7 | 0.48 | 0.102 | 3.05 | 28.8 | 90.5 |
| Comparative example 6 | 11.7 | 0.07 | 11.9 | 0.06 | 0.005 | 3.24 | 26.1 | 94.2 |

In Embodiments 1-7, by controlling the concentration of the carbon source, the electrostatic spraying voltage and electrostatic spraying flow within the particular ranges, the particle size of the carbon precursor formed through spraying could be controlled so as to form sphere-like carbon precursor particles. Through subsequent activation, and adsorption and densification of the active substance, the average value $D_1$ of the particle sizes and the standard deviation $S_1$ of the particle sizes of the prepared anode material met within the predetermined ranges. In an aspect, the active substance could be deposited on the matrix more evenly, such that when the anode material was embedded with active ions during a charge-discharge cycle, the stress distribution of the anode material particles was more evenly, thereby reducing the expansion rate and the risk of cracking and pulverization during the cycling of a battery prepared by the anode material. Therefore, the expansion rate was relatively low, the stable capacity of the battery prepared by the anode material was maintained, and the cycling performance of the battery prepared by the anode material was improved. In another aspect, the gaps between the anode material particles were reduced, such that the volume energy density of the anode plate was increased, thereby causing the areal capacity density to be relatively high. The distribution uniformity of a conductive agent and an electrolyte among the anode materials was also improved, thereby improving the contact and infiltration between the electrolyte and the anode material, facilitating the charge-discharge efficiency and dynamic performance of the battery prepared by the anode material, and achieving higher ICE.

Compared with Embodiment 5, in Comparative example 1, the concentration of the carbon source was relatively low, when other conditions were the same, during the removing of a solvent by spray particles, solvent volatilization easily caused the particle size of the prepared carbon precursor to reduce, and at the same time, the volatilization of a larger amount of solvent tended to cause the carbon precursor to recess, which resulted in the deterioration of the particle size uniformity, and the standard deviation of the particle size was larger, such that the average values of the particle sizes of the carbon matrix and the anode material obtained in Comparative example 1 were less than a set lower limiting value, and the standard deviations of the particle sizes of the carbon matrix and the anode material were greater than a set upper limiting value.

Compared with Embodiment 5, in Comparative example 3, the electrostatic spraying voltage was relatively high, and when other conditions were the same, the particle size of the sprayed particles was caused to be relatively small, and the standard deviation of the particle size was relatively large, such that the average values of the particle sizes of the carbon matrix and the anode material obtained in Comparative example 3 were less than a set lower limiting value, and the standard deviations of the particle sizes of the carbon matrix and the anode material were greater than a set upper limiting value.

Compared with Embodiment 5, in Comparative example 5, the electrostatic spraying voltage was relatively low, and when other conditions were the same, the particle size of the sprayed particles was caused to be relatively small, the standard deviation of the particle size was relatively large, and the number of sphere-like carbon precursors was reduced, such that the average values of the particle sizes of the carbon matrix and the anode material obtained in Comparative example 5 were less than a set lower limiting value, and the standard deviations of the particle sizes of the carbon matrix and the anode material were greater than a set upper limiting value.

Since the particle sizes of the carbon precursors in Comparative examples 1, 3, and 5 were too small, vapor activation was fast, the aperture gaps generated by activation was uneven, and the specific surface area was large. Uneven aperture gaps caused uneven distribution of the expansion stress of the anode material, and the expansion rate was increased; and the large specific surface area caused a reduction in the ICE and nanosilicon oxidation, and nanosilicon oxidation led to a reduction in the areal capacity density. Furthermore, since the standard deviations of the particle sizes of the carbon precursors in Comparative examples 1, 3, and 5 were too large, the distribution of the conductive agent and the electrolyte among the particles was uneven, leading to uneven expansion stress, and further resulting in an increase in the expansion rate of the anode plate and a reduction of the ICE of the secondary battery.

Compared with Embodiment 7, in Comparative example 2, the concentration of the carbon source was relatively high, and when other conditions were the same, the concentration of the carbon source in the particles sprayed through electrostatic spraying was too high, leading to the relatively large particle size of the sprayed particles, such that the average values of the particle sizes of the carbon matrix and the anode material obtained in Comparative example 2 were greater than a set upper limiting value.

Compared with Embodiment 7, in Comparative example 4, the electrostatic spraying voltage was relatively low, and when other conditions were the same, the particle size of the sprayed particles was caused to be relatively large, and the number of sphere-like carbon precursors was reduced, such that the average values of the particle sizes of the carbon matrix and the anode material obtained in Comparative example 4 were greater than a set upper limiting value.

Compared with Embodiment 7, in Comparative example 6, the electrostatic spraying voltage was relatively high, and when other conditions were the same, the particle size of the sprayed particles was caused to be relatively large, such that the average values of the particle sizes of the carbon matrix and the anode material obtained in Comparative example 6 were greater than a set upper limiting value.

Since the particle sizes of the carbon precursors in Comparative examples 2, 4, and 6 were too large, vapor activation was slow, the pore volume generated by activation was small, the adsorbed nanosilicon was less, and the gap between the particles was large, thereby causing a reduction in the areal capacity density of the anode material.

The above results showed that, when the average value $D_1$ of the particle sizes and the standard deviation $S_1$ of the particle sizes of the anode material met the predetermined range, the surface density of the anode material was higher, the expansion rate of the anode plate was lower, and the ICE of the secondary battery was higher.

## Claims

1. A matrix, having pores and comprising a carbon material, wherein
   an average value $D_0$ of particle sizes of the matrix is 5.5 $\mu$m to 9.5 $\mu$m, and a standard deviation $S_0$ of the particle sizes of the matrix is 0.08 to 0.35.

2. The matrix according to claim 1, meeting at least one of the following features:

   (1) a relative standard deviation $S_0/D_0$ of the particle sizes of the matrix is 0.008 to 0.064;
   (2) the matrix has a sphere-like structure, and a degree of sphericity of the matrix is 0.9 to 1.0;
   (3) a total pore volume of the matrix is 0.5 cm$^3$/g to 2.0 cm$^3$/g.

3. The matrix according to claim 1, meeting at least one of the following features:

   (1) an average pore diameter of the matrix is 0.1 nm to 8 nm; or
   (2) the matrix comprises carbon material, the carbon material comprises one or more of artificial graphite, amorphous carbon, activated carbon, and mesocarbon microbeads.

4. A anode material, comprising a matrix and an active substance, wherein the matrix has pores, and at least partial active substance is disposed in the pores of the matrix; and

an average value $D_1$ of particle sizes of the anode material is 5.5 $\mu$m to 9.5 $\mu$m, and a standard deviation $S_1$ of the particle sizes of the anode material is 0.1 to 0.35.

5. The anode material according to claim 4, meeting at least one of the following features:

(1) a relative standard deviation $S_1/D_1$ of the particle sizes of the anode material is 0.010 to 0.064;
(2) based on the mass of the anode material, a mass proportion of oxygen in the anode material is 0.05% to 4.0%.

6. The anode material according to claim 4, meeting at least one of the following features:

(1) a specific surface area of the anode material is less than or equal to 10 $m^2/g$;
(2) a powder conductivity of the anode material is 0.05 S/m to 5 S/m.

7. The anode material according to claim 4, meeting at least one of the following features:

(1) a areal capacity density of the anode material is 4.55 mAh/$cm^2$ to 6.10 mAh/$cm^2$;
(2) a pore volume of the anode material is less than or equal to 0.15 $cm^3/g$;

8. The anode material according to claim 4, meeting at least one of the following features:

(1) an average pore diameter of the anode material is less than or equal to 10 nm; or
(2) the anode material has a sphere-like structure, and a degree of sphericity of the anode material is 0.9 to 1.0.

9. The anode material according to claim 4, the matrix meets at least one of the following features:

(1) an average value $D_0$ of particle sizes of the matrix is 5.5 $\mu$m to 9.5 $\mu$m, and a standard deviation $S_0$ of the particle sizes of the matrix is 0.08 to 0.35;
(2) a relative standard deviation $S_0/D_0$ of the particle sizes of the matrix is 0.008 to 0.064;
(3) the matrix has a sphere-like structure, and a degree of sphericity of the matrix is 0.9 to 1.0.

10. The anode material according to claim 4, the matrix meets at least one of the following features:

(1) a total pore volume of the matrix is 0.5 $cm^3/g$ to 2.0 $cm^3/g$; or
(2) an average pore diameter of the matrix is 0.1 nm to 8 nm.

11. The anode material according to claim 4, wherein the matrix comprises at least one of a carbon material or a non-carbon material;

the carbon material comprises one or more of artificial graphite, amorphous carbon, activated carbon, and mesocarbon microbeads; and
the non-carbon material comprises at least one of a metal oxide, a silicide, a silicate, a phosphate, a titanate, or an aluminoborate; the metal oxide comprises one or more of aluminum oxide, zirconium oxide, germanium dioxide, and manganese dioxide; the silicide comprises one or more of silicon carbide and silicon nitride; the silicate comprises one or more of cordierite, mullite, and zeolite; the phosphate comprises one or more of aluminum phosphate, magnesium phosphate, calcium phosphate, titanium phosphate, chromic phosphate, cobalt phosphate, nickel phosphate, germanium phosphate, zirconium phosphate, niobium phosphate, molybdenum phosphate, tantalum phosphate, tungsten phosphate, and lanthanum phosphate; and the titanate comprises one or more of calcium titanate, iron titanate, lithium titanate, and barium titanate.

12. The anode material according to claim 4, wherein the active substance comprises one or more of Si, Li, Na, K, Sn, Ge, Fe, Mg, Ti, Zn, Al, P, and Cu.

13. The anode material according to claim 4, wherein the matrix comprises a carbon matrix, the active substance comprises a silicon material, the silicon material comprises one or more of amorphous silicon, crystalline silicon, silicon oxide, silicon alloy, and a compound of the crystalline silicon and the amorphous silicon, and the anode material meets at least one of the following features:

(1) based on the mass of the anode material, a mass proportion of carbon in the anode material is 30% to 70%; or

(2) based on the mass of the anode material, a mass proportion of silicon in the anode material is 30% to 80%.

14. A anode plate, comprising a anode current collector and a anode active material layer disposed on the anode current collector, wherein the anode active material layer comprises the anode material according to any one of claims 4 to 13.

15. A secondary battery, comprising the anode plate according to claim 14.

Fig.1

Fig.2

Fig.3

Fig.4

5μm

Fig.5

5μm

Fig.6